# EUROPEAN PATENT APPLICATION

(11) **EP 4 462 656 A1**
(43) Date of publication of application: **13.11.2024**
(21) Application number: 23190555.5
(22) Date of filing: 09.08.2023
(51) Int. Cl.: H02K 15/00, H02K 3/12

(54) **LASER INTEGRATED MACHINING SYSTEM FOR STATOR ASSEMBLY**

(30) Priority: 12.05.2023 KR 20230061892
(71) Applicant: Hubis Co., Ltd., Daejeon 34014 (KR)
(72) Inventor: KIM, Myoung Jin, Daejeon 34023 (KR); KIM, Jong Sik, Daejeon 35201 (KR); LEE, Ji Ho, Daejeon 34022 (KR); SHIN, Hee Sung, Daejeon 35210 (KR); YANG, Jin Mo, Daejeon 35346 (KR)
(74) Representative: Urizar Anasagasti, Jesus Maria

(57) **Abstract**

Proposed is a laser integrated machining system for a stator assembly, the system machining hairpins inserted in a stator in the order of aligning, cutting, examining, and welding. Accordingly, it is possible to minimize the standby time for welding ends of hairpins, and minimize poor welding and improve productivity by performing cutting and welding with hairpins clamped.

## Description

### CROSS REFERENCE TO RELATED APPLICATION

The present application claims priority to Korean Patent Application No. 10-2023-0061892, filed May 12, 2023, the entire contents of which are incorporated herein for all purposes by this reference.

### BACKGROUND OF THE INVENTION

### Field of the Invention

The present disclosure relates to a laser integrated machining system for a stator assembly, the system being configured to machine hairpins inserted in the stator of an electric motor in the order of aligning, cutting, examining, and welding. In detail, the present disclosure relates to a laser integrated machining system for a stator assembly, the system being able to minimize the standby time for machining hairpins, and minimize poor welding and improve productivity by performing cutting and welding with hairpins clamped.

### Description of the Related Art

Recently, research for improving the power of electric motors is being actively conducted with the increase in demand for electric vehicles. A method of increasing a slot fill factor using hairpins in a motor and of increasing power density by increasing speed is used. That is, a technology of inserting and electrically connecting hairpins having a rectangular cross-section in stator slots is used.

A large number of hairpins are inserted in stator slots, and welding should be repeatedly performed to electrically connect the ends of the hairpins. It is required to align the ends of a large number of hairpins protruding out of slots at the same height in order to minimize poor welding. If not performed, poor contact, poor welding, etc. occur at the welded portions of the hairpins, which causes a problem of easy deterioration of the durability of the motor.

It is required to develop a hairpin welding system that can improve productivity and minimize the defective rate in welding by performing, through one system, both of cutting for aligning the ends of a large number of hairpins, which are inserted in and protrude out of slots of a stator, respectively, at the same height and welding for electrically connecting the hairpins after cutting.

### (Documents of Related Art)

(Patent Document 1) US 2020-0153319 "A METHOD AND DEVICE FOR POSITIONING AND CLAMPING WIRE ENDS FOR ELECTRIC MACHINES" (Appliction date: 2018.06.12)
(Patent Document 2) JP 2005-224028 "Apparatus and method of bonding segment coils" (Appliction date: 2004.02.06)
(Patent Document 2) US 2022-0126405 "AUTOMATED INSPECTION AND VERIFICATION OF ELECTRIC MOTOR WELD QUALITY" (Appliction date: 2020.10.23)

### SUMMARY OF THE INVENTION

The present disclosure has been made in an effort to solve the problems described above and an objective of the present disclosure is to provide a laser integrated machining system for a stator assembly, the system being able to reduce poor welding and improve productivity by preventing the ends of hairpins being misaligned due to movement of a stator assembly because the hairpins keep fixed by one jig in cutting and welding when cutting the ends at the same height and then performing welding after fixing the ends of the hairpins.

A laser integrated machining system for a stator assembly of the present disclosure includes: a frame including rails extending a predetermined length; a fixing unit seated on the rails, reciprocating in a longitudinal direction of the rails, and configured to fix a stator assembly having a large number of hairpins inserted therein; and an alignment jig including a rotator configured to rotate the fixed stator assembly.

The alignment jig may further include a clamping unit configured to clamp the large number of hairpins in pairs, and the alignment jig may be reciprocated with the large number of hairpins clamped.

A cutting unit positioned under the alignment jig and configured to cut the hairpins and a welding unit configured to weld the cut hairpins may be further fixedly installed on the frame. A vision examination unit may be further provided on the frame between the cutting unit and the welding unit.

The cutting unit may include: a cutting assembly being operated to cut ends of the hairpins clamped by the clamping unit; and an elevation assembly configured to move the cutting assembly up and down.

The alignment jig may be rotated by the rotator to turn upside down the stator assembly and then moved toward the welding unit along the rails when ends of the hairpins are cut by the cutting assembly.

The laser integrated machining system may further include a carrying rail extending a predetermined length on the frame and a moving jig assembly mounted on the carrying rail and reciprocating in a longitudinal direction of the carrying rail, and may further include a clamp installed on the moving jig assembly and configured to hold the stator assembly. The moving jig assembly may include two moving jig assemblies configured to hold stator assemblies before and after machining, respectively.

The clamp may include: a cylinder configured to driving a rod shaft configured to move up and down; a housing having the rod shaft inserted therein and having a guide groove formed outward on a side thereof; an elevation block coupled to a first end of the rod shaft to integrally move with the rod shaft; and a pressing block coupled to a side of the elevation block and being guided to slide in the guide groove by up-down movement of the elevation block.

The alignment jig may further include a jig plate having a stator through-hole in which a lower end of the stator assembly is partially inserted, and a rail block moving along the rails. The fixing unit may include: a pressing motor configured to generate power for a straight motion; and a pressing block connected to the pressing motor to be provided with power for a straight motion from the pressing motor, and configured to selectively come in surface contact with an outer surface of the stator assembly.

The rotator may include: a pair of rotary plates coupled to both sides of the jig plate, respectively, and rotatably installed on the rail block; and a rotation motor configured to rotate the rotary plates.

The cutting assembly may include: cutter bodies having a lead pin fastened to a lower end thereof and having a cutter mounted on a side thereof; a guide housing having the cutter bodies seated thereon, having pin movement holes in which the lead pins are inserted, and having body insertion grooves configured to guide the inserted cutter bodies toward the hairpins; a cam follower having a predetermined radius of curvature to convert a rotation motion into a straight motion, and having pin guide grooves in which the lead pins are inserted and that have a predetermined radius of curvature; and a cam follower rotator configured to rotate the cam follower.

The clamping unit may include: a first plate having first holes that are formed therethrough and in which the hairpins are inserted; a second plate disposed on a bottom of the first plate and having second holes that are formed therethrough and in which the hairpins passing through the first holes are inserted; a first rotator configured to rotate the first plate in a first direction; and a second rotator configured to rotate the second plate in a second direction. The hairpins may be welded by a laser and the welding unit may further include a lens configured to adjust a focus of the laser that is emitted.

The present disclosure has an advantage that it is possible to minimize poor welding of ends of hairpins because hairpins are aligned, and cut and welded in a fixed state in one jig. According to the present disclosure, a standby time of a stator assembly before machining is reduced due to efficient movement of moving jigs, and cutting and welding of hairpins are continuously performed, so productivity can be improved.

### BRIEF DESCRIPTION OF THE DRAWINGS

The above and other objectives, features and other advantages of the present invention will be more clearly understood from the following detailed description when taken in conjunction with the accompanying drawings, in which:
FIG. 1 is a conceptual view showing the entire configuration of the present disclosure;
FIG. 2 is a view showing the configuration of a part of a laser integrated machining system for a stator assembly of the present disclosure;
FIG. 3 is a conceptual view showing the main configuration of an alignment jig of the present disclosure;
FIGS. 4A, 4B, and 4C are conceptual views showing an operation example of a fixing unit of the alignment jig of the present disclosure;
FIG. 5 is a conceptual view showing an embodiment of operation of a clamping unit of the present disclosure is operated;
FIG. 6 is a conceptual view showing the main configuration of the clamping unit of the present disclosure;
FIG. 7 is a conceptual view showing the main configuration of a cutting unit of the present disclosure;
FIG. 8 is a cross-sectional view showing the main configuration of the cutting unit and the alignment jig of the present disclosure;
FIG. 9 is a conceptual view showing an embodiment when ends of hairpins are fixed with the cutting unit moved up after a stator assembly is seated and fixed on the alignment jig of the present disclosure;
FIG. 10 is a conceptual view showing the main configuration of a vision examination unit of the present disclosure;
FIG. 11 is a conceptual view showing the main configuration of a moving jig of the present disclosure;
FIG. 12 is a conceptual view showing the main configuration of a clamp of the present disclosure;
FIGS. 13A and 13B are conceptual views showing an embodiment of operation of the clamp of the present disclosure; and
FIGS. 14 to 21 are conceptual views briefly showing an embodiment of operation of the laser integrated machining system for a stator assembly of the present disclosure.

### DETAILED DESCRIPTION OF THE INVENTION

Hereafter, a laser integrated machining system for a stator assembly of the present disclosure is described hereafter in detail with reference to drawings.

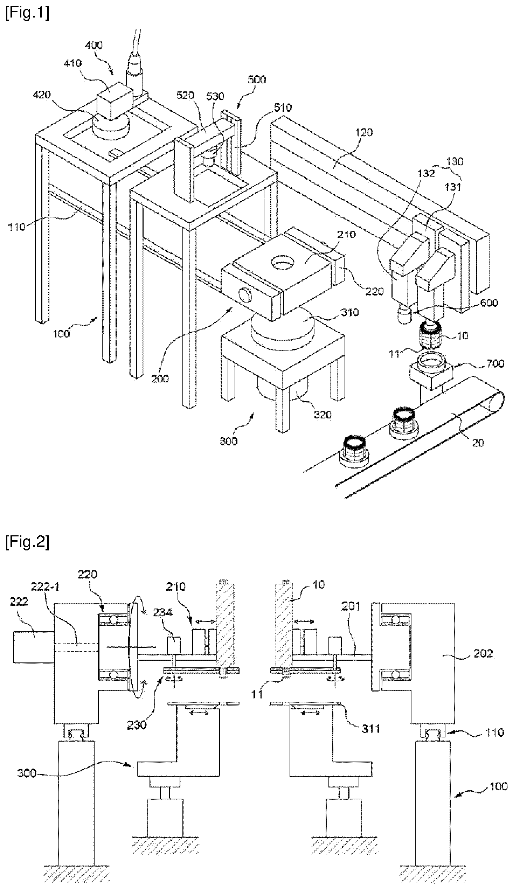

Referring to FIG. 1, the present disclosure includes a frame 100, an alignment jig 200 disposed on the frame 100, moving straightly along rails 110, and rotating by itself, and a cutting unit 300 cutting ends of hairpins 11. The present disclosure includes a vision examination unit 500 configure to cut ends of hairpins 11 and a welding unit 400 configured to electrically connect cut ends of hairpins 11. The present disclosure includes a moving jig assembly 130 configured to move a hairpin assembly 10 to the alignment jig 200 and a clamp 600 coupled to an end of the moving jig assembly 130. According to the present disclosure, the moving jig assembly 130 transfers a stator assembly fixed by the clamp 600 to the alignment jig 200. A stator 12 and hairpins 11 protruding from a side of the stator assembly 10 transferred on the alignment jig 200 are fixed by the alignment jig 200. The hairpins 11 protruding from the side are cut by the cutting unit 300 disposed under the alignment jig 200. The alignment jig 200 is rotated. The hairpins 11 turned to face up are moved to under the vision examination unit 500 along the rails 110, whereby the state including the external appearance of the cut hairpins 11 are examined. When it is determined that welding is possible after examination is finished, the hairpins are moved to the welding unit 400 and then laser-welded to be electrically connected. The alignment jig is moved to the initial position after welding is finished. The moving jig assembly 130 moves and discharges the stator assembly 10 that has undergone welding to a temporal holder 700 or a feeder 20. The present disclosure is described in detail with reference to the accompanying drawings.

### [Frame (100)]

Referring to FIG. 1, the frame 100 functions as a framework for fixedly installing the alignment jig 200, the cutting unit 300, the welding unit 400, the vision examination unit 500, etc. to be described below. Though not shown in detail, a conveyance rail 120 and the moving jig assembly 130 may also be fixedly installed on the frame 100. The temporal holder 700 may also be fixedly installed on the frame 100. FIG. 1 is briefly shown to help understanding, and columns, beams, etc. for securing structural stability may be additionally installed.

Referring to FIG. 1, a pair of rails 110 extending a predetermined length is fixedly installed on the frame so that the alignment jig 200 to be described below can be moved. The pair of rails 110 may make parallel lines at a predetermined height from the bottom of the frame 100. The rails 110 are fixed higher than the cutting unit 300 to be described below. The rails 110 may horizontally extend to be parallel with the floor.

Meanwhile, the temporal holder 700 that receives a stator assembly 10 from the separate feeder 20 may be further fixedly installed on the frame 100. If necessary, the temporal holder 700 may be installed separately from the frame 100.

### [Alignment jig (200)]

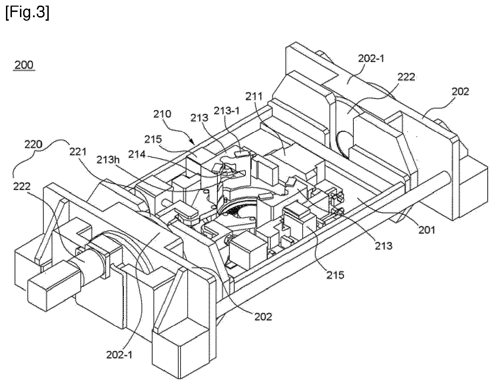

Referring to FIGS. 1 and 3, the alignment jig 200 is seated on the rails 110. The alignment jig 200 seated on the rails 110 is moved straightly along the rails 110 and rotated by a separate actuator (a motor, etc.). Slide rail motors on the market may be used for the rails 110 and the separate actuator.

The alignment jig 200 includes a fixing unit 210 fixing the outer surface of a stator 12, a clamping unit 230 fixing ends of a large number of hairpins 11 protruding out of slots of a stator, and a rotator 220 rotating the stator assembly 10 fixed by the fixing unit 210. The fixing unit 210 and the rotator 220 are described below.

The alignment jig 200 further includes a jig plate 201 and rail blocks 202. The jig plate 201 has a predetermined thickness and a stator through-hole 201h through which the lower portion of the stator assembly 10 partially passes is further formed at the center of the jig plate 201. That is, the lower portion of the stator assembly 10 is partially inserted into the stator through-hole 201h when the stator assembly 10 is moved into the alignment jig 200 such that the ends of a large number of hairpins 11 to be cut face down (the ground). Accordingly, the large number of hairpins 11 are exposed through the bottom of the jig plate 201. The rail blocks 202 are formed at both ends of the jig plate 201, respectively, seated on the rails 110, and moved along the rails 110.

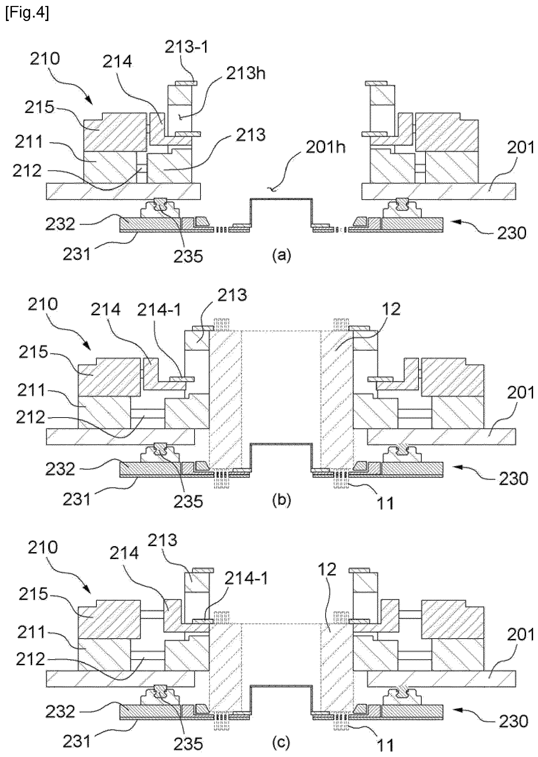

Referring to FIGS. 2 to 4C, the fixing unit 210 presses and fixes the outer surface of a stator 12. The fixing unit 210 is seated on the top of the jig plate 201.

The fixing unit 210 further includes a pressing motor 211 and a pressing block 213. The pressing motor 211 is seated and fixed on the top of the jig plate 201 and generates power for a straight motion. The pressing motor 211 may be a motor, a hydraulic or pneumatic cylinder, an actuator, etc. As an embodiment, the pressing motor 211 is driven by power from the outside and may further have a pressing rod 212 that horizontally reciprocates on a side.

The pressing block 213 is connected to the pressing motor 211 and can be straightly moved on the top of the jig plate 201 by power for a straight motion from the pressing motor 211. The pressing block 213 is coupled to an end of the pressing rod 212 stated in the above embodiment, so it can be moved with the pressing rod 212. Pressing blocks 213 are provided as a pair at predetermined distances from the center of the stator through-hole 201h and are symmetrically disposed to face each other.

The lower portion of a stator assembly 10 is inserted into between the spaced pressing blocks 213. Thereafter, the pressing motor 211 is drive, whereby the pressing blocks 213 are straightly moved in a symmetric direction toward each other. As the pressing blocks 213 are moved, first sides facing each other of the pressing blocks 213 selectively come in surface contact with the outer surface of the stator assembly 10, thereby pressing and fixing the stator assembly 10 in two directions. The first sides facing each other of the pressing blocks 213 each may be formed in an arc shape to correspond to the outer surface of the stator assembly 10.

A stopper 213-1 that is seated on the edge of the upper end of the stator 12 of a fixed stator assembly 10 may be further formed on the upper end of the pressing block 213. Ends of the stopper 213-1 may protrude a predetermined distance toward a stator assembly 10 further than the first sides of the pressing blocks 213 that come in surface contact with a stator 12. That is, when the pressing blocks 213 fix a stator assembly 10, the stoppers 213-1 support the upper end of a stator 12. Accordingly, it is possible to prevent the stator assembly 10 from falling down from the fixing unit 210 even though a stator assembly 10 is turned upside down by rotation of the alignment jig 200.

Meanwhile, a through-hole 213h is formed through the sides of each of the pressing blocks 213. Second pressing blocks 214 and second pressing motors 215 that horizontally move the second pressing blocks 214 may be further provided on the top of the jig plate 210. The second pressing blocks 214 and the second pressing motors 214 are provided to more firmly fix stator assemblies 10 having different heights.

The second pressing motor 215 may have the same purpose and configuration as the pressing motor 211. The second pressing block 214 is connected to the second pressing motor 215, thereby horizontally straightly moving. When a stator assembly 10 having a small height is fixed by the pressing blocks 214, first surfaces of the second pressing blocks 214 come in surface contact with a portion of the outer surface of the upper end of a stator assembly 10 through the through-holes 213h.

A second stopper 214-1 that moves with the second pressing block 214 may be further provided on the top of the second pressing block 214. An end of the second stopper 214 protrudes toward a stator assembly 10 further than the first side of the second pressing block 214 that comes in surface contact with a stator 12. Accordingly, when the first side of the second pressing block 214 comes in surface contact with the outer surface of a stator assembly 10, the bottom of the second stopper 214 is seated on a portion of the top of a stator 12. Accordingly, it is possible to prevent the stator assembly 10 from falling down from the fixing unit 210 even though the stator assembly 10 is turned upside down. Referring to FIGS. 2 and 3, the rotator 220 is disposed between the jig plate 201 and the rail block 202 and rotates the jig plate 201. When the jig plate 201 is rotated, a stator assembly 10 inserted in the jig plate 201 can be turned upside down. For example, hairpins 11 to be cut first are inserted into the jig plate 201 with ends thereof facing down. The stator assembly 10 is fixed by the fixing unit 210, and then when the ends of the hairpins 110 finish being cut, the rotator 220 rotates the jig plate 201 such that the stator assembly is turned upside down.

The rotator 220 includes rotary plates 221 and a rotation motor 222. The rotary plates 221 are disposed at the pair of rail blocks 202, respectively, and face each other between the rail blocks 202 and the jig plate 201. Both ends of the jig plate 201 are fixed to the rotary plates 221, respectively, between the rotary plates 221 facing each other. The rotary plate 221 is rotatably installed on the rail block 202. The rotary plate 221 is inserted in a rotary plate housing 202-1 protruding from a first side of the rail block 202 and is supported to rotate by a bearing disposed between the rotary plate 221 and the rotary plate housing 202-1. Accordingly, the jig plate 201 can be rotated to be turned over together with the rotary plates 221.

The rotation motor 222 is installed on a second side of any one of the pair of rail blocks 202 and a rotary shaft 222-1 of the rotation motor 222 is connected to the rotary plate 221 through the rail block 202. Accordingly, the rotation motor 222 provides a rotation force to the rotary plate 221, thereby rotating the rotary plate 221.

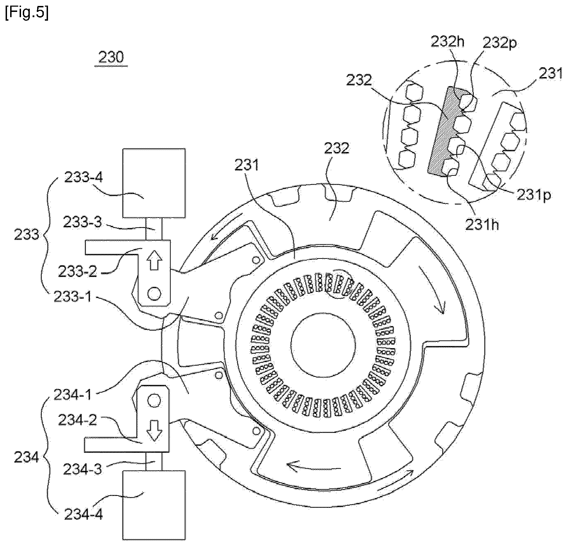

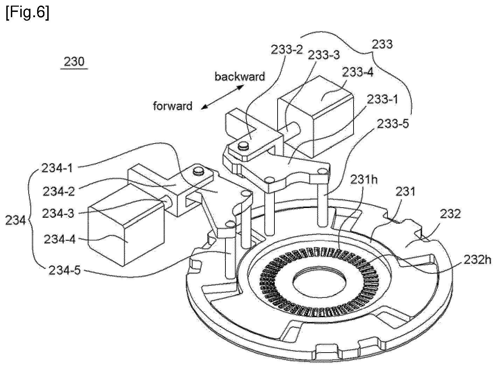

Referring to FIGS. 2, 5, and 6, the alignment jig 200 further includes a clamping unit 230. The clamping unit 230 is installed on the bottom of the jig plate 201 and positioned under the fixing unit 210. The clamping unit 230 enables a large number of hairpins 11 exposed from the lower end of a stator 21 to be arranged in pairs with regular intervals and firmly fixes the hairpins 11. Exposed ends of a large number of hairpins 11 initially inserted in a large number of slots (not shown) of a stator 12 are unavoidably irregularly arranged. This is a factor that causes many defects in welding using a laser. The clamping unit 230 can regularly align hairpins 11, which are irregularly arranged, in pairs.

The clamping unit 230 includes a first plate 231, a second plate 232, a first rotator 233, and a second rotator 234.

The first plate 231 has a disc shape with a predetermined thickness. A first hole 231h is formed through the first plate 231. As shown in the figures, a large number of first holes 231h are formed with regular intervals. Ends of hairpins 11 are inserted in the first holes 231h. A large number of first separation protrusions 231p for separating hairpins 11 in pairs may be formed on at a side of the inner surfaces of the first holes 231h.

The second plate 232 has a disc shape with a predetermined thickness and is disposed on the bottom of the first plate 231. The first plate 231 and the second plate 232 are in close contact with each other and rotated in different directions.

A large number of second holes 232h are formed through the second plate 232 too. Referring to the figures, a large number of second through-holes 232h are formed with regular intervals. The first holes 231h and the second holes 232h are disposed to face each other. A pair of hairpins 11 passing through a first hole 231h is inserted in a first hole 231h. A large number of second separation protrusions 232p are formed on the inner surfaces of the second hole 232h that face the inner surfaces of the first holes 231h on which the first protrusions 231p are formed.

The first separation protrusion 231p formed in the first holes 231h and the second separation protrusions 232p formed in the second holes 232h may be formed in only any one of the first holes 231h and the second holes 232h in accordance with a design change by a user.

When the first plate 231 and the second plate 232 are rotated in different directions, the first separation protrusion 231p and the second separation protrusions 232p press, in different direction, sides of hairpins 11 passing through the first holes 231h and the second holes 232h. Accordingly, a large number of hairpins 11 can be clamped separately in pairs. For example, the first plate 231 is rotated clockwise and the second plate 232 is rotated counterclockwise.

Meanwhile, a rotation rail 235 guiding the rotation direction of the second plate 232 may be further provided between the top of the second plate 232 and the bottom of the jig plate 201. The top of the rotation rail 235 is fixed to the bottom of the jig plate 201. The rotation rail 235 is formed while making a predetermined rotation radius, and the center axis of the rotation radius made by the rotation rail 235 and the rotation center axis of the rotation radius made by rotation of the second plate are the same. Accordingly, a portion of the top of the second plate 232 is seated on the rotation rail 235, whereby the second plate 232 can be guided to smoothly rotate.

The first rotator 233 is provided to rotate the first plate 231 in one direction and includes a first bracket 233-1, a first link 233-2 rotatably coupled to the first bracket 233-1, and a first driving motor 233-4 having a link rod 233-3 that is straightly moved.

The first bracket 233-1 is coupled to the first plate 231. A pair of first connection rods 233-5 having a predetermined length is further provided between the first bracket 233-1 and the first plate 231. Since the first connection rods 233-5 are provided, the first bracket 233-1 and the first plate 231 can be spaced a predetermined distance apart from each other. When the link rod 233-3 is moved backward by the first driving motor 233-4, the first link 233-2 pulls the first bracket 233-1 to a side, whereby the first plate 231 is rotated clockwise. On the other hand, when the link rod 233-3 is moved forward, the first plate 231 is rotated counterclockwise.

The second rotator 234 is provided to rotate the second plate 231 in another direction and includes a second bracket 234-1, a second link 234-2, a link rod 234-3, a driving motor 234-4, and second connection rods 234-5. The components of the second rotator 234 are symmetric to the components of the first rotator 233, respectively, and have the same operation mechanism.

### [Cutting unit (300)]

Referring to FIGS. 1 and 7 to 9, the cutting unit 300 is disposed under the alignment jig 200. The cutting unit 300 simultaneously cuts the ends of a large number of hairpins 11 clamped by the clamping unit 230. The ends of hairpins 11 may be different in height before cutting. Since the ends of hairpins 11 are cut by the cutting unit 300, the ends of the hairpins 11 protruding from the stator can have the same height. Accordingly, the quality of laser welding is improved, whereby it is possible to reduce a defective rate.

The cutting unit 300 includes a cutting assembly 310 and an elevation assembly 320. The cutting assembly 310 cuts the ends of clamped hairpins 11. The elevation assembly moves up/down the cutting assembly 310. The elevation assembly 320 may be disposed under the cutting assembly 310. When a stator assembly 10 is seated and fixed on the alignment jig 200, the large number of hairpins 11 are exposed under the clamping unit 230 of the alignment jig 200. The elevation assembly 320 moves up the cutting assembly 310 to uniformly cut the exposed a large number of hairpins 11 simultaneously.

The cutting assembly 310 includes a seat plate 311, a cutter body 312, a guide housing 313, a cam follower 314, and a rotator 315.

The seat plate 311 has a predetermined thickness. The seat plate 311 is seated on the top of the cutter body 312 to be described below and prevents the cutter body 312 from separating upward. The seat plate 311 has a large number of pin insertion holes 311h in which hairpins 11 fixed on the alignment jig 200 are inserted when the cutting unit 300 is moved up.

Referring to the figures, the cutter body 312 radially extends a predetermined length. A large number of cutter bodies 312 are provided in accordance with arrangement of hairpins 11 inserted in a stator assembly 10. A large number of cutter bodies 312 are arranged in a circular shape with regular circumferential intervals.

A lead pin 312-1 is fastened to the bottom of the cutter body 312. A rotary ring 312r fitted on the end portion of the lead pin 312-1 and rotating on the outer surface of the lead pin 312-1 is further disposed on the outer surface of the lead pin 312-1. A cutter 312-1 that cuts hairpins 11 is mounted on a side of the cutter body 312. The end of the cutter 312-2 may be machined at an angle to easily cut hairpins 11.

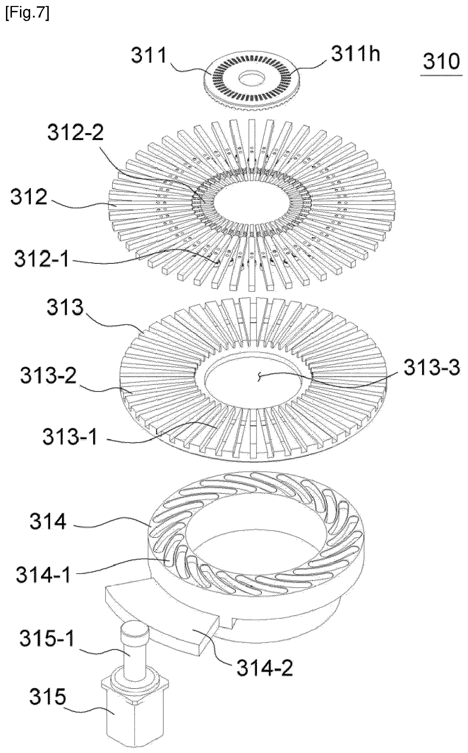

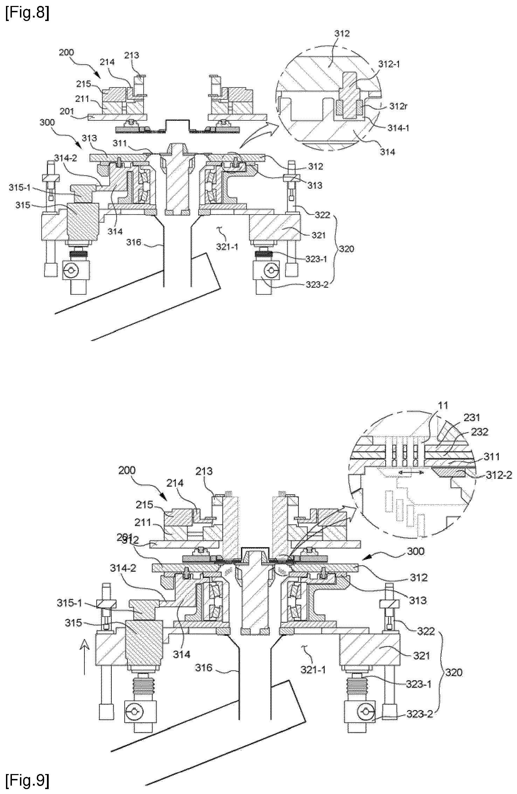

Referring to FIGS. 7 and 8, the guide housing 313 is positioned under the cutter body 312 and has a recessed body insertion groove 313-2 in which the cutter body 312 is inserted. A large number of body insertion grooves 313-2 are arranged in a circular shape with regular intervals. A pin movement hole 313-1 passing through the guide housing 313 and having a predetermined length is formed on the bottom of the body insertion groove 313-2. Accordingly, when the cutter body 312 is fitted in the body insertion groove 313-2, the lead pin 312-1 is inserted in the pin movement hole 313-1, whereby the lead pin 312-1 protrudes downward further than the bottom of the guide housing 313. The cutter body 312 inserted in the body insertion groove 313-2 straightly slides toward the center of the guide housing 313. A through-hole 313-1 is formed at the center of the guide housing 313 and hairpins 11 cut by the cutter bodies 312 fall down through the through-hole 313.

The cam follower 314 is positioned under the guide housing 313 and the guide housing 313 is seated on the top of the cam follower 314. The cam follower 314 is rotated by the rotator 315 to be described below.

Pin guide grooves 314-1 in which the lead pins 312-1 protruding from the bottom of the guide housing 313 are inserted are formed on the top of the cam follower 314. The pin guide grooves 314-1 each have an arc shape having a predetermined radius of curvature with a side facing the center of the cam follower 314.

The cam follower 314 can convert a rotation motion of the cam follower 314 into a straight motion of the cutter bodies 312. That is, when the cam follower 314 is rotated, the lead pins 312-1 are guided by the pin guide grooves 314-1 to move from a first side to a second side of the pin guide grooves 314-1. When the lead pins 312-1 provides a propelling force to the cutter bodies 312 while moving, the cutter bodies 312 slide along the body insertion grooves 313-2. Depending on the rotation direction of the cam follower 314, the lead pins 312-1 is moved from the first side to the second side or from the second side to the first side of the pin guide grooves 314-1.

Accordingly, the cutter bodies 312 can be moved forward or backward, depending on the rotation direction of the cam follower 314.

The rotator 315 is a motor that is operated by power, and rotates the cam follower 314 by a set angle to in a first direction or a second direction. The rotator 315 includes a rotary shaft 315-1 on a side that is rotated when the rotator 315 is operated. The rotary shaft 315-1is connected to the edge of an arc-shaped rotation lead protruding from the outer surface of the cam follower 314 and rotates the cam follower 314 in the first direction or the second direction. The rotator 315 may be not only a motor that can rotate the cam follower 314, but various devices that can replace the motor.

Referring to FIG. 9, a pin delivery pipe 316 may be further provided under the cam follower 314 so that chips cut from the ends of hairpins 11 can be discharged outside. Hairpins 11 cut by the cutter bodies 312 fall down and are discharged outside through the delivery pipe 316.

Referring to FIG. 9, the elevation assembly 320 includes an elevation body 321, guide rods 322, and elevators 323. The cutting unit 310 is seated on the top of the elevation body 321 and has a through-hole 321-1 at the center through which the delivery pipe 316 passes. The guide rods 322 have a cylindrical shape having a predetermined diameter and are erect to perpendicularly pass through the elevation body 321. At least two or more guide rods 322 are provided and guide up-down movement direction of the elevation body 321. At least two or more elevators 323 are provided under the elevation body 321 and support the elevation body 321. The elevator 323 is composed of an elevation rod 323-1 moving up and down and an elevation motor 323-2 providing power to the elevation rod 323-1.

As an embodiment of the elevator 323, the elevator 323 may be an assembly of gears for moving up/down the elevation rod 323-1. For example, the elevation rod 323-1 is a rack gear type and a pinion gear connected to the elevation rod 323-1 transmits power, whereby the elevation rod 323-1 can be moved up and down. As another embodiment, the elevation rod 323-1 is a ball screw type and a worm gear connected to the ball screw transmits power, whereby the elevation rod 323-1 can be moved up and down. In addition to the embodiments described above, various other methods can be used.

### [Welding unit (400)]

The welding unit 400 is a welding unit that uses a laser to electrically connect the ends of cut hairpins 11 in pairs. The welding unit 400 includes a head 410 emitting a laser beam and a lens 420 positioned under the head 410 to adjust the focus of an emitted laser.

Laser light emitted from the head 410 may be a near-infrared laser having a wavelength of 1000 ∼ 1100nm, a green laser having a wavelength of 500 ∼ 570nm, or a blue laser having a wavelength of 440 ∼ 490nm. The lens 420 may be an F-θ(theta) lens. Though not shown, a blower, etc. for solving the problems of spatters, etc. that may be generated during welding may be mounted near the lens 420.

### [Vision examination unit (500)]

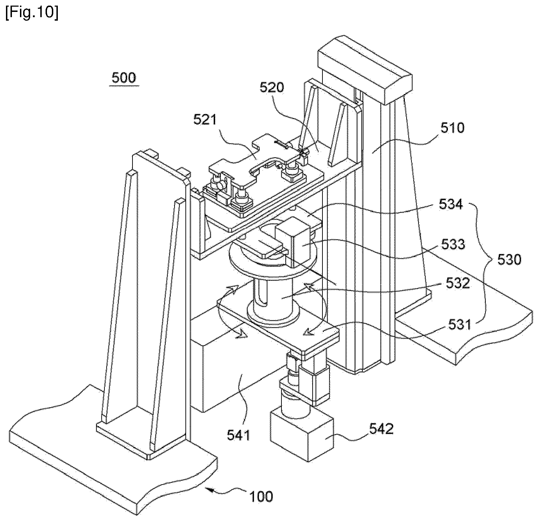

Referring to FIGS. 1 and 10, the vision examination unit 500 is installed on the frame 100 and may be disposed between the cutting unit 300 and the welding unit 400. The vision examination unit 500 is a device for photographing and analyzing the length, cross-sectional shape, alignment state, etc. of the ends of cut hairpins 11. Photographs can be 2-dimensionally or 3-dimensionally taken. Optical coherence tomography (OCT) may be applied.

The vision examination unit 500 includes guide rails 510, a moving block 520, a rotator 530, and first and second examiners 541 and 542. The guide rails 510 are provided in a pair to be vertically erect and are spaced in parallel apart from each other.

Both ends of the moving block 520 is coupled to the guide rails 510, so the moving block 520 is moved up/down along the guide rails 510. The rotator 530 to be described below is mounted on the bottom of the moving block 520. A precise adjuster 521 having a first end connected to the rotator 530 through the moving block 520 is further disposed on the top of the moving block 520. It is possible to precisely adjust the up-down movement distance of the rotator 530 by operating the precise adjuster 521.

The rotator 530 includes a first bracket 531, a rotary shaft 532, a rotation motor 533, and a second bracket 534. The first bracket 531 is spaced apart from the moving block 520, and the first and second examiners 541 and 542 are installed at both ends of the first bracket 531, respectively.

A first end of the rotary shaft 532 is coupled to the top of the first bracket 531, whereby the rotary shaft 532 and the first bracket 531 form one body.

The second bracket 534 is coupled to a first end of the moving block 520 or the precise adjuster 521, whereby it moves with the moving block 520.

The rotation motor 533 is fixed at a first side to the second bracket 534 and connected at a second side to the rotary shaft 532 and transmits a rotation force to the rotary shaft 532, thereby rotating the rotary shaft 532.

Accordingly, when the rotation motor 533 is driven, the first bracket 531 is rotated with the rotary shaft 532, so the first and second examiners 541 and 542 fixed to the first bracket 531 can also be rotated. The first and second examiners 541 and 542 examine ends of hairpins circumferentially arranged in and protruding out of slots of a stator while rotating along the ends.

The first examiner 541 is a device for scanning the height and the alignment state of hairpins 11 into a 3D image and the second examiner 542 is a device for scanning the alignment state of hairpins 11 into a 2D image. The examiners examine whether there is a defect through comparison with reference images.

Though not shown in the figures, a return sensing unit that senses whether the rotary shaft 532 rotates 360° may be further disposed on the second bracket 534. When a signal is sensed from the return sensing unit, the rotation direction of the rotation motor 533 is changed, whereby the rotary shaft 532 is rotated 360° in the opposite direction to the previous rotation direction. Accordingly, it is possible to prevent cables connected to the examiners from being twisted or entangled.

A master jig that moves with the alignment jig 200 may be further provided at a side of the alignment jig 200. Since the master jig is further provided, reference coordinates of the first and second examiners 541 and 542 before hairpins 11 are examined can be provided. Meanwhile, when ends of hairpins 11 are cut, the alignment jig 200 holding a stator assembly 10 turns upside down the stator assembly 10. The alignment jig 200 holding the stator assembly 10 having the cut hairpins 11 is moved toward the vision examination unit 500. The vision examination unit 500 measures the alignment state of the ends of the hairpins 11.

When the hairpins 11 that can be welded have been aligned, the alignment jig 200 is moved to the welding unit 400.

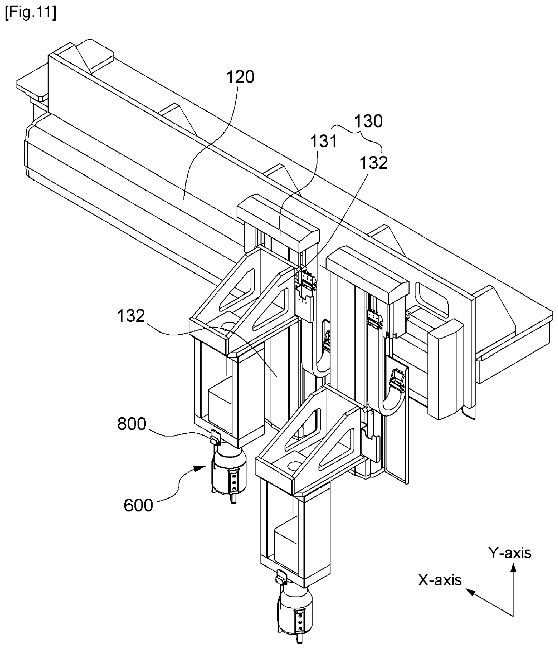

Referring to FIGS. 1 and 11, the present disclosure further includes a carrying rail 120 and a moving jig assembly 130 to carry stator assemblies 10. The carrying rail 120 is positioned at the upper portion of the frame 100 and extends in parallel with the floor.

The moving jig assembly 130 is mounted on the carrying rail 120 and reciprocates in the longitudinal direction of the carrying rail 120. The moving jig assembly 130 includes a first moving body 131 moving in an X-axial direction along the carrying rail 120 and a second moving body 132 coupled to the first moving body 131 and moving in a Y-axial direction. Two moving jig assemblies 130 may be provided to hold a welded stator assembly 10 and a non-welded stator assembly 10, respectively. This is for reducing the work time. Meanwhile, a manipulator that is operated in motions similar to those of the arms of human, etc. may be used to carry stator assemblies 10, and any structure that can carry stator assemblies 10 other than the carrying rail 120 and the moving jig assembly 130 described above can be applied.

### [Clamp (600)]

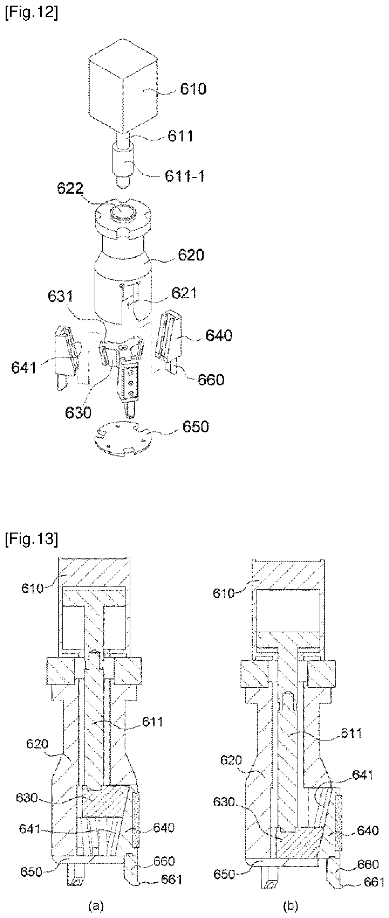

Referring to FIGS. 12, 13A, and 13B, a clamp 600 is further provided under the moving jig assembly 130. The clamp 600 holds the stator assembly 10 placed on the temporal holder 700. When the second moving body 132 is moved down, the clamp 600 is inserted into the hole formed at the center of a stator 12 and fixed in close contact with the inner surface of the stator 12.

Referring to FIGS. 12, 13A, and 13B, the clamp 600 includes a cylinder 610, a housing 620, an elevation block 630, and a pressing block 640.

The cylinder 610 is operated by pneumatic pressure hydraulic pressure and includes a rod shaft 611 moving up/down in the Y-axial direction. The rod shaft 611 extends a predetermined length from the lower end of the cylinder 610, thereby being exposed.

The housing 620 is a hollow part, has a shape with an open lower end, and has a shaft insertion hole 622 at the upper end in which the rod shaft 611 is inserted. The rod shaft 611 is inserted in the shaft insertion hole 622, whereby the cylinder 610 is seated and fixed on the upper end of the housing 620.

A guide groove 621 passing outward through the housing 620 is formed on the side of the housing 620. The guide groove 621 communicates with the empty inside of the housing 620.

A housing cover 650 that covers the open lower end of the housing 620 may be disposed at the lower end of the housing 620.

Meanwhile, a stopper 611-1 having a diameter larger than that of the rod shaft 611 is further formed on the side of the rod shaft 611. The stopper 611-1 is provided to limit the up-down movement distance of the rod shaft 611.

The elevation block 630 is disposed in the hollow housing 620. The elevation block 630 is fixed at an end of the rod shaft 611, thereby integrally moving with the rod shaft 611. The elevation block 630 has an inverted trapezoidal shape such that the cross-sectional area gradually decreases downward. As shown in the figures, the outer surface of the elevation block 630 can make an inclined surface having a predetermined angle due to the trapezoidal shape of the elevation block 630. A guide rail 631 having a predetermined inclination angle is further formed on the outer surface of the elevation block 630.

The pressing block 640 is coupled to the outer surface of the elevation block 630. A guide groove 641 is formed on a first side of the pressing block 640 that faces the outer surface of the elevation block 630. The guide rail 631 is inserted in the guide groove 641. The first side of the pressing block 640 makes an inclination at an angle symmetrically to the inclination of the outer surface of the elevation block 630. At least two or more pressing blocks 640 may be formed to stably hold stator assemblies 10.

Referring to FIG. 13A, when the elevation block 630 is moved up, the pressing block 640 is inserted into the housing 620. Referring to FIG. 13B, when the elevation block 630 is moved down, the pressing block 640 slides outward from the housing 620.

As the pressing block 640 moves outward from the housing 630, a second side of the pressing block 640 comes in close contact with the inner surface of the center hole of a stator assembly 10. Accordingly, it is possible to hold the stator assembly 10 due to movement of the pressing block 640.

Meanwhile, a fixing hook 660 protruding downward is further formed at the lower end of the pressing block 640. A coupling protrusion 661 having a predetermined length is further formed at the end of the fixing hook 660. When the pressing block 640 moves outward from the housing 620, the coupling protrusion of the fixing hook 660 is seated on the edge of the lower end of a stator assembly 10. Accordingly, it is possible to prevent a stator assembly 10 from falling down by sliding when the stator assembly 10 is lifted.

Meanwhile, a sensor 800 for measuring the insertion depth of the housing 620 that is inserted into a stator assembly 10 may be further provided at the lower end of the second moving body 132.

Hereafter, the operation method of the present disclosure is described.

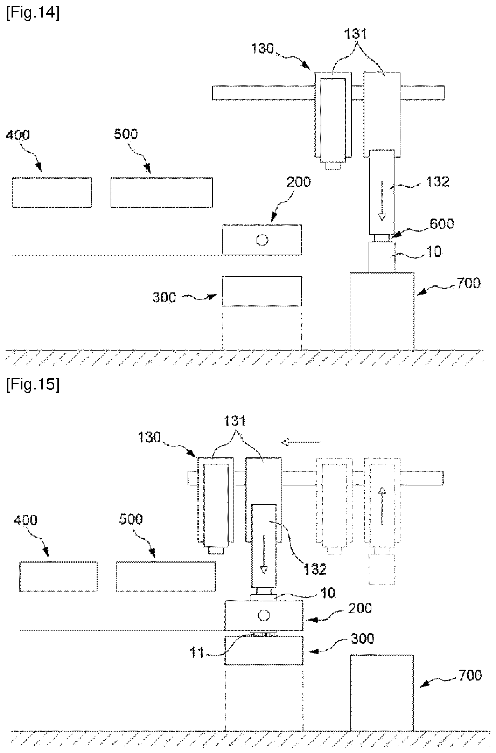

Referring to FIG. 14, a separate feeder (not shown) for stator assemblies 10 moves a stator assembly 10 to the temporal holder 700. In FIG. 11, the right second moving body 132 of a pair of second moving bodies 132 is moved down. The clamp 600 at the lower portion of the second moving body 132 holds the stator assembly 10 and then moves up.

Referring to FIG. 15, the moving jig 130 is moved toward the alignment jig 200. The second moving body 132 holding the stator assembly 10 seats the stator assembly 10 on the alignment jig 200. The alignment jig 200 fixes the stator assembly 10. The alignment jig 200 aligns and clamps a large number of hairpins 11 simultaneously.

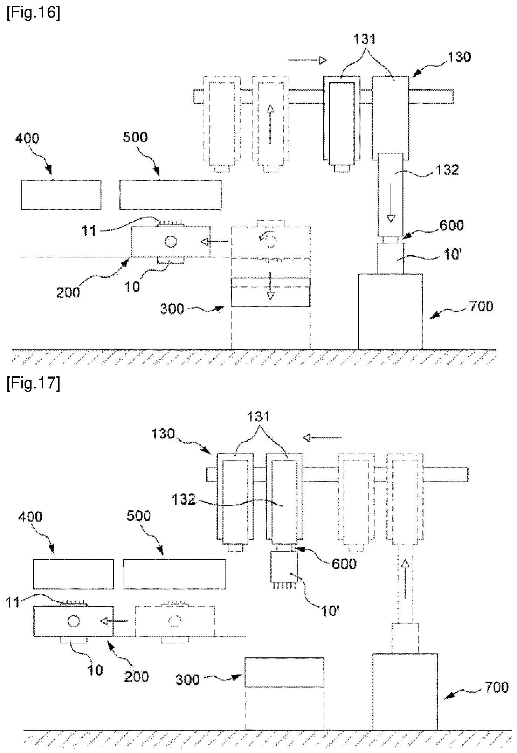

Referring to FIG. 16, the cutting unit 300 is moved up and simultaneously cuts the hairpins 11 clamped by the alignment jig 200. When the hairpins 11 are cut, the cutting unit 300 moves down and returns to the initial position. Meanwhile, the rotator 220 rotates the alignment jig 200 such that the ends of the cut hairpins 11 face up. The rotated alignment jig 200 is moved toward the vision examination unit 500 along the rails 110.

Thereafter, the vision examination unit 500 photographs and examines the alignment state of the ends of the cut hairpins 11. The examiner 520 can be moved up/down. Meanwhile, a pair of moving jigs 130 is moved toward the temporal holder 700. A second stator assembly 10' has been seated on the temporal holder 700. The right second moving body 132 of the second moving bodies 132 in FIG. 13 is moved down and the clamp 600 holds the second stator assembly 10'.

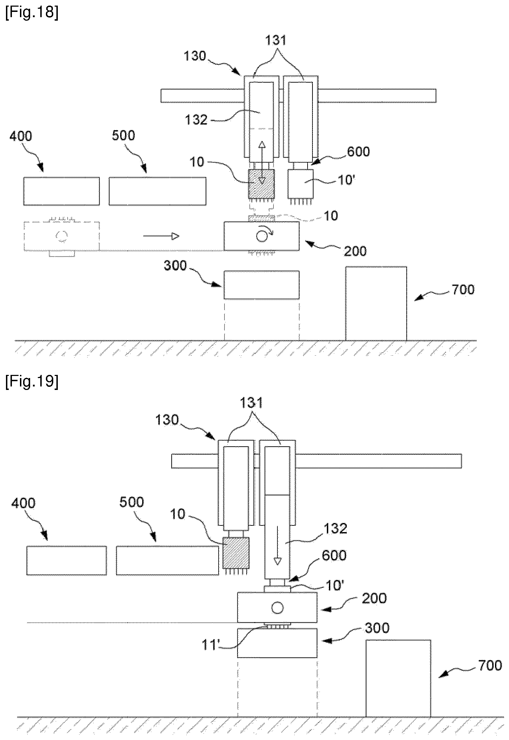

Referring to FIG. 17, the second moving body 132 is moved up and the pair of moving jigs 130 moves for standby to the position of the alignment jig 200 before the alignment jig 200 is moved. Meanwhile, the alignment jig 200 fixing the first stator assembly 10 is moved toward the welding unit 400 and the hairpins 11 of the first stator assembly 10 are welded. Referring to FIG. 18, after welding is finished, the alignment jig 200 is moved toward the cutting unit 300 and returned to the initial position. The rotator 2200 rotates the alignment jig 200 such that the first stator assembly 10 that has undergone welding is turned upside down. The welded hairpins 11 facing up are turned upside down.

Thereafter, the left moving body 132 in FIG. 18 is moved down and inserts the clamp 600 in to the stator assembly 10 that has undergone welding. When the clamp 600 holds the first stator assembly 10, the second moving body 132 is moved up. Accordingly, the first stator assembly 10 seated in the alignment jig 200 is released.

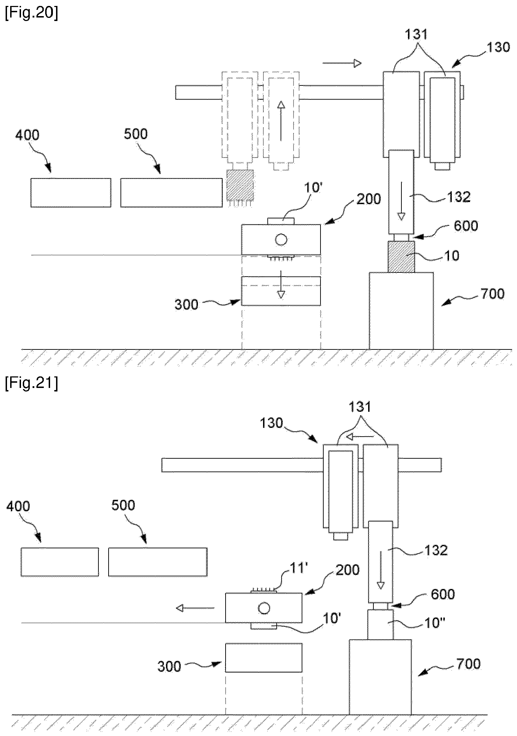

Referring to FIG. 19, the right second moving body 132 of the pair of moving jigs 130 is moved down. In this process, the second stator assembly 10' held in standby at the right side is seated in the alignment jig 200. The clamp 600 releases the second stator assembly 10' and the second moving body 132 is moved up. Thereafter, the alignment jig 200 fixes the second stator assembly 10' and then clamps hairpins 11' one pair by one pair. Referring to FIG. 20, the pair of moving jigs 130 holding the first stator assembly 10 is moved toward the temporal holder 700. The left second moving body 132 releases the first stator assembly 10, which has undergone welding, while moving down. The cutting unit 300 is moved up and curt the hairpins 11 of the second stator assembly 10' seated in the alignment jig 200. When the hairpins 11' are cut, the cutting unit 300 moves down and returns to the initial position.

Referring to FIG. 21, a third stator assembly 10" is fed to the temporal holder 700. Thereafter, the right second moving body 132 of the pair of moving jigs 130 moves down and holds the third stator assembly 10". The hairpins 11' of the second stator assembly 10' seated in the alignment jig 200 are welded through the vision examination unit 500 and the welding unit 400. Stator assemblies 10 can be welded without a standby time of the alignment jig 200 by repeating these processes described above.

The laser integrated machining system for a stator assembly having this configuration of the present disclosure can minimize poor welding of the ends of hairpins. Further, since the standby time of the alignment jig 200 is reduced by efficient movement of the moving jig 130, productivity of stator assemblies 10 can be improved.

## Claims

1. A laser integrated machining system for a stator assembly, the laser integrated machining system comprising:
a frame including rails extending a predetermined length;
a fixing unit seated on the rails, reciprocating in a longitudinal direction of the rails, and
configured to fix a stator assembly having a large number of hairpins inserted therein; and
an alignment jig including a rotator configured to rotate the fixed stator assembly.

2. The laser integrated machining system of claim 1, wherein the alignment jig further includes a clamping unit configured to clamp the large number of hairpins in pairs, and
the alignment jig is reciprocated with the large number of hairpins clamped.

3. The laser integrated machining system of claim 2, wherein a cutting unit positioned under the alignment jig and configured to cut the hairpins and a welding unit configured to weld the cut hairpins are further fixedly installed on the frame.

4. The laser integrated machining system of claim 3, wherein a vision examination unit is further provided on the frame between the cutting unit and the welding unit.

5. The laser integrated machining system of claim 4, wherein the cutting unit includes:
a cutting assembly being operated to cut ends of the hairpins clamped by the clamping unit; and
an elevation assembly configured to move the cutting assembly up and down.

6. The laser integrated machining system of claim 5, wherein the alignment jig is rotated by the rotator to turn upside down the stator assembly and then moved toward the welding unit along the rails when ends of the hairpins are cut by the cutting assembly.

7. The laser integrated machining system of claim 1, further comprising
a carrying rail extending a predetermined length on the frame and a moving jig assembly mounted on the carrying rail and reciprocating in a longitudinal direction of the carrying rail, and
further comprising a clamp installed on the moving jig assembly and configured to hold the stator assembly.

8. The laser integrated machining system of claim 7, wherein the moving jig assembly includes two moving jig assemblies configured to hold stator assemblies before and after machining, respectively.

9. The laser integrated machining system of claim 7, wherein the clamp includes:
a cylinder configured to driving a rod shaft configured to move up and down;
a housing having the rod shaft inserted therein and having a guide groove formed outward on a side thereof;
an elevation block coupled to a first end of the rod shaft to integrally move with the rod shaft; and
a pressing block coupled to a side of the elevation block and being guided to slide in the guide groove by up-down movement of the elevation block.

10. The laser integrated machining system of claim 1, wherein the alignment jig further includes a jig plate having a stator through-hole in which a lower end of the stator assembly is partially inserted, and a rail block moving along the rails.

11. The laser integrated machining system of claim 10, wherein the fixing unit includes:
a pressing motor configured to generate power for a straight motion; and
a pressing block connected to the pressing motor to be provided with power for a straight motion from the pressing motor, and configured to selectively come in surface contact with an outer surface of the stator assembly.

12. The laser integrated machining system of claim 11, wherein the rotator includes:
a pair of rotary plates coupled to both sides of the jig plate, respectively, and rotatably installed on the rail block; and
a rotation motor configured to rotate the rotary plates.

13. The laser integrated machining system of claim 5, wherein the cutting assembly includes:
cutter bodies having a lead pin fastened to a lower end thereof and having a cutter mounted on a side thereof;
a guide housing having the cutter bodies seated thereon, having pin movement holes in which the lead pins are inserted, and having body insertion grooves configured to guide the inserted cutter bodies toward the hairpins;
a cam follower having a predetermined radius of curvature to convert a rotation motion into a straight motion, and having pin guide grooves in which the lead pins are inserted and that have a predetermined radius of curvature; and
a cam follower rotator configured to rotate the cam follower.

14. The laser integrated machining system of claim 2, wherein the clamping unit includes:
a first plate having first holes that are formed therethrough and in which the hairpins are inserted;
a second plate disposed on a bottom of the first plate and having second holes that are formed therethrough and in which the hairpins passing through the first holes are inserted;
a first rotator configured to rotate the first plate in a first direction; and
a second rotator configured to rotate the second plate in a second direction.

15. The laser integrated machining system of claim 3, wherein the hairpins are welded by a laser and the welding unit further includes a lens configured to adjust a focus of the laser that is emitted.
